# EUROPÄISCHE PATENTSCHRIFT

(11) **EP 0 754 129 B1**
(45) Veröffentlichungstag und Bekanntmachung des Hinweises auf die Patenterteilung: **10.06.1998**
(21) Anmeldenummer: 95915055.8
(22) Anmeldetag: 06.04.1995
(51) Int. Cl.: B60J 5/04

(54) **FAHRZEUGTÜRE MIT LÖSBAREM KOLLISIONSSCHUTZ**
VEHICLE DOOR WITH DETACHABLE ANTICOLLISION SYSTEM
PORTES DE VEHICULE A SYSTEME ANTICOLLISION AMOVIBLE

(30) Priorität: 15.04.1994 DE 4412935; 18.04.1994 DE 4413022; 18.10.1994 DE 4437219
(43) Veröffentlichungstag der Anmeldung: 22.01.1997
(73) Patentinhaber: STEYR-DAIMLER-PUCH AKTIENGESELLSCHAFT, 1010 Wien (AT)
(72) Erfinder: SIEPE-NOLL, Wolfgang, D-50259 Pulheim (DE)
(86) Internationale Anmeldenummer: AT9500070
(87) Internationale Veröffentlichungsnummer: WO9528295

(56) Entgegenhaltungen:
- EP-A- 0 527 700
- DE-A- 4 125 299
- DE-B- 2 215 674
- FR-A- 2 258 280
- GB-A- 2 271 534
- US-A- 5 340 189

## Beschreibung

Die Erfindung betrifft eine Türe für Kraftfahrzeuge mit einem längsgerichteten, von einem vorderen bis zu einem hinteren Türholm reichenden Kollisionsschutzkörper, dessen Enden sich im Kollisionsfall an den Türholmen abstützen.

Derartige Kollisionsschutzkörper sind nach dem Stand der Technik als integraler Bestandteil der Tür in deren Innerem fest eingebaut und beispielsweise als Rohre, abgekantete Blechteile oder andere Formteile ausgebildet, die bei einem die Türe treffenden Seitenstoß durch elastische oder plastische Verformung kinetische Energie aufnehmen, um die Passagiere zu schützen. Bisweilen ist auch vorgesehen, daß sie bei einem Aufprall des Fahrzeugs im Frontbereich Kräfte in Fahrzeuglängsrichtung vom vorderen Türholm zum hinteren Türholm weiterleiten, um die Verformung der Fahrgastzelle im Bereich des Armaturenbrettes, des vorderen Dachholmes sowie des Türschwellers zu begrenzen. Alle diese Aufgaben können sie nur erfüllen, wenn auch ein Durchdrücken der Tür ins Innere des Fahrzeuges verhindert wird. Dazu sind die Türholme an der Fahrzeuginnenseite in die Türöffnung vorgezogen und die Verstärkungen oft so gestaltet, daß sie sich im Kollisionsfall an den Türholmen des Fahrzeugkörpers abstützen.

Aus der DE-C 22 15 674 und der DE-A 41 25 299 sind Kollisionsschutzkörper bekannt, deren Enden unter Einwirkung eines seitlichen Stoßes aus der Tür heraustreten und in die Türholme eingreifen beziehungsweise eindringen. Nachteilig ist dabei zunächst die Tatsache, daß diese Bauteile sich im Falle einer Verformung der Karosserie so stark im Türrahmen verklemmen können oder in diesen eindringen, daß nach einem Unfall die beschädigte Tür nur mit großem Kraftaufwand und mechanischen Hilfsmitteln, meist aber überhaupt nicht zu öffnen ist.

Ein weiterer Nachteil dieser Bauelemente besteht darin, daß ihre Wirkung als einzelnes längsgerichtetes Profil nur begrenzt ist und daß sie den Türholm im Falle einer Frontalkollision wenn überhaupt, so nur punktuell und damit unzureichend versteifen. Dadurch können sie eine parallelogrammartige Verformung der Tür in ihrer eigenen Ebene und ein Aufwärtsbiegen von Schweller und Dachholm nicht verhindern, wodurch die Tür auch im Fall einer Frontalkollision in der Türöffnung festgeklemmt wird. Besonders ungünstig sind die Verhältnisse bei Cabriolets, da diese über keinen Dachholm verfügen.

Allen ins Innere der Tür fest eingebauten Verstärkungen ist schließlich noch der Nachteil gemein, daß sie Herstellung und Zusammenbau der Tür verkomplizieren, nicht zuletzt, da im Inneren der Tür auch noch andere Funktionsteile unterzubringen und zu montieren sind.

Der Erfindung liegt daher die Aufgabe zugrunde, eine Fahrzeugtür mit einfachen Mitteln so auszubilden, daß sie im Kollisionsfall den Fahrzeugkörper versteift, nicht in das Fahrzeuginnere eindringen kann und trotzdem nach einer Kollision mit geringem Kraftaufwand zu öffnen ist und die Bergung der Passagiere gestattet.

Erfindungsgemäß wird das dadurch erreicht, daß der Kollisionsschutzkörper als mit der Türe lösbar verbundene, im Vertikalschnitt quer zur Fahrtrichtung einen Teil der Türkontur bildende Baueinheit ausgebildet ist, sodaß im Kollisionsfall die Fahrzeugtüre geöffnet werden und der Kollisionsschutzkörper in der Türöffnung verbleiben kann.

Der Kollisionsschutzkörper kann als Teil der Türkontur mit einem in beiden Richtungen erheblichen Querschnitt ausgestattet werden, er stellt somit eine in allen Richtungen wirksame Versteifung der Tür und des Wagenkastens sowie eine kraftschlüssige Verbindung zwischen Tür und Türholmen her, die verformende Stöße aufzunehmen vermag. Damit schützt er einerseits den Bein- und Beckenbereich der Insassen, andererseits läßt sich die Türe von ihm lösen, sodaß nach einem Unfall der steife, meist verklemmte Teil der Türe - der Kollisionsschutzkörper - in der Türöffnung des Fahrzeuges bleibt, während der leichte Teil der Fahrzeugtüre geöffnet werden kann, um die Insassen über den Kollisionsschutzkörper hinweg aus dem Fahrzeug zu bergen.

Weiters bedeutet die Trennung in zwei Bauteile, die erst gemeinsam die Kontur der Tür ergeben, eine fertigungstechnische Vereinfachung. Der Kollisionsschutzkörper braucht nicht an schwer zugänglicher Stelle in die Tür eingebaut zu werden, er wird als vorgefertigtes Teil einfach mit der Tür verbunden, die dann selbst auch eine viel einfachere Baueinheit darstellt.

Da die nie vollständig erfüllbare Forderung, nach einer Kollision die Tür öffnen zu können, wegen der Lösbarkeit der beiden Teile fallengelassen werden kann, kann der Kollisionsschutz vorzugsweise als Kasten ausgebildet sein, dessen Stirnflächen am vorderen und hinteren Türholm anliegen (Anspruch 2). Dadurch kann er besonders großzügig dimensioniert und mit einer ausreichenden Zahl von in die Türholme eingreifenden Verankerungselementen ausgerüstet sein. Durch sein Anliegen an den Türholmen kann er stärkere seitliche Stöße in die Türholme einleiten und größere und auch vertikal gerichtete Kräfte von dem vorderen auf den hinteren Türholm übertragen, wodurch auch einer parallelogrammartigen Verformung der Türöffnung entgegengewirkt ist. Auf die letztgenannte Weise versteift er den Wagenkörper auch im Falle einer Frontalkollision. Durch die größere Fläche kann seine schützende Wirkung im Falle einer Seitenkollision maximiert werden.

Es liegt im Rahmen der Erfindung, den Kollisionsschutzkörper an seiner in Fahrtrichtung vorderen Stirnseite mit einem am Türholm angeschlagenen Scharnier zu versehen und bis zum unteren Rand der Türöffnung hinabreichen zu lassen (Anspruch 3). Der zweite Scharnier ist dann am leichten Teil der Türe angebracht. Dadurch wird die lösbare Verbindung von Tür und Kollisionsschutzkörper entlastet und über den Scharnier eine direkte Verbindung zwischen Kollisionsschutzkörper und Türholm geschaffen. Der bis zum Schweller hinabgezogene Kollisionsschutzkörper stützt sich dann auch einwärts am Schweller ab, was zu einer weiteren Versteifung der Gesamtstruktur führt.

In einer vorteilhaften Ausführungsform ist der Kollisionsschutzkörper an der Innenseite der Tür angeordnet (Anspruch 4). Die Tür überlappt dann außen den Kollisionsschutzkörper, wodurch für die lösbare Verbindung eine große vertikale Fläche zur Verfügung steht und überdies das äußere Erscheinungsbild des Fahrzeuges erhalten bleibt. Außerdem sind in dem überlappenden Teil der Tür noch Teile eines Fensterhebers unterzubringen.

In einer anderen vorteilhaften Ausführungsform bildet der Kollisionsschutzkörper den ganzen unteren Bereich der Tür (Anspruch 5). Dadurch steht die gesamte Dicke der Tür für dessen Querschnitt zur Verfügung und die Verbindungsfläche kann zumindest teilweise horizontal gelegt werden, wodurch die Verbindung an besser zugänglicher Stelle vorgenommen werden kann.

In einer Weiterbildung der Erfindung sind zur Verbindung von Kollisionsschutzkörper und Tür Verbindungsteile vorgesehen, die im Kollisionsfall brechen oder reißen und so die Verbindung mit der Türe lösen (Anspruch 6). Derartige Verbindungsteile können fest genug ausgebildet sein, um beim Öffnen und Schließen der Türe sowie im Fahrbetrieb zuverlässig zu halten, jedoch bei einer Verformung des äußeren Türblattes abgeschert oder abgerissen zu werden. Vorzugsweise bestehen diese Verbindungsteile aus einem spröden Werkstoff, der bei Scherbeanspruchung bricht (Anspruch 7). Es kann sich dabei um einen spröden metallischen oder keramischen Werkstoff handeln, wobei es ein Vorteil ist, daß sich die Scherfestigkeit sehr genau festlegen läßt und bei einem spröden Werkstoff ohne vorhergehendes Fließen erreicht wird. Solche Teile können somit mit nur sehr wenig streuender Scherfestigkeit hergestellt werden.

In einer anderen Weiterbildung der Erfindung sind als Verbindungsteile in elastisch am anderen Teil befestigte Hülsen mit Bohrungen eingesteckte Zapfen vorgesehen (Anspruch 8). Durch die elastische Befestigung können die Hülsen Verschiebungen und Verkantungen aufnehmen, sodaß sich die Bolzen nicht in den Hülsen verkanten können. Dadurch können die Zapfen während oder nach einer Kollision leichter aus den Hülsen gezogen werden.

In wieder einer anderen Weiterbildung sind Türe und Kollisionsschutzkörper über Sollbruchstellen miteinander verbunden, die an einem der beiden Teile ausgebildet sind (Anspruch 9). Diese Art der Verbindung ist besonders einfach und billig, da die beiden Teile in gewohnter Weise durch Punktschweißen miteinander verbunden werden können und trotzdem das erfindungsgemäße Lösen der Verbindung erfolgen kann.

In einer noch anderen Weiterbildung sind zur Verbindung von Kollisionsschutzkörper und Tür Magnete an einem der beiden Teile angebracht, die mit entsprechend geformten Flächen des anderen Teiles zusammenwirken (Anspruch 10). Bei ausreichender Dimensionierung und Formgebung der Kontaktflächen wird auch so eine Verbindung mit der nötigen Haltekraft erreicht, die sich löst, sobald durch Verformungen Magnet und Kontaktflächen ihre relative Lage geändert haben. Geeignet sind sowohl Permanentmagnete als auch Magnete, die elektrisch aktiviert und im Falle einer Kollision elektronisch gesteuert deaktiviert werden.

Im folgenden wird die Erfindung anhand von Abbildungen beschrieben und erläutert. Es stellen dar:
- Fig.1:: Teilweise Seitenansicht eines Kraftfahrzeuges mit der erfindungsgemäßen Tür in einer ersten Ausführungsform,
- Fig.2:: Querschnitt nach II-II in Fig.1,
- Fig.3:: Kraftfahrzeug nach dem Stand der Technik nach einer Kollision,
- Fig.4:: Schnitt IV-IV in Fig.1, vergrößert,
- Fig.5:: Variante des Details A in Fig.4, vergrößert,
- Fig.6:: Weitere Variante des Details A in Fig.4, vergrößert,
- Fig.7:: Querschnitt einer erfindungsgemäßen Tür in einer zweiten Ausführungsform,
- Fig.8:: Horizontalschnitt nach VIII-VIII in Fig.7.

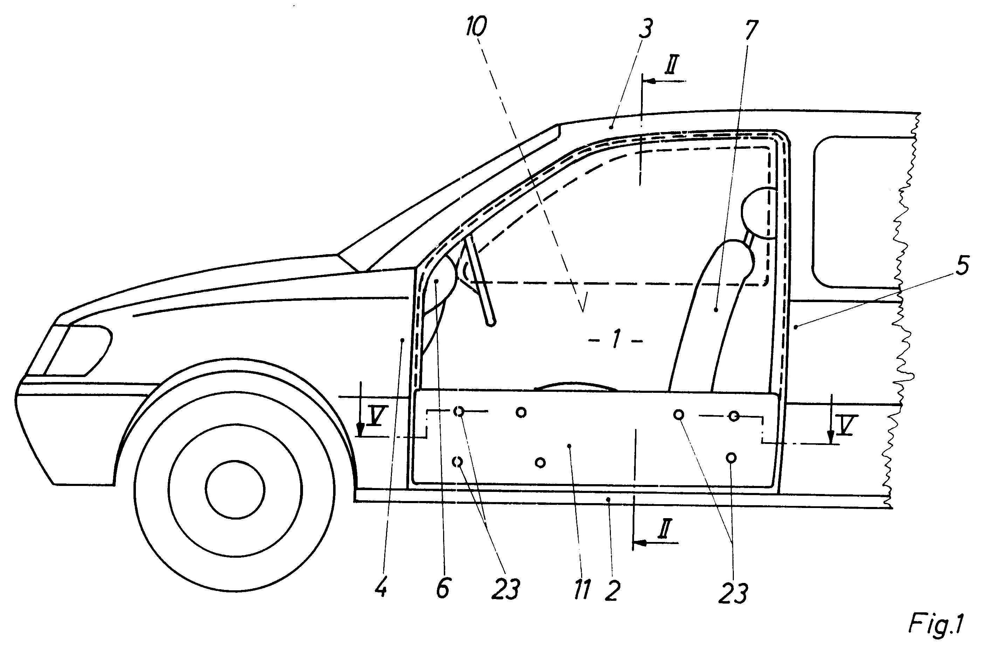

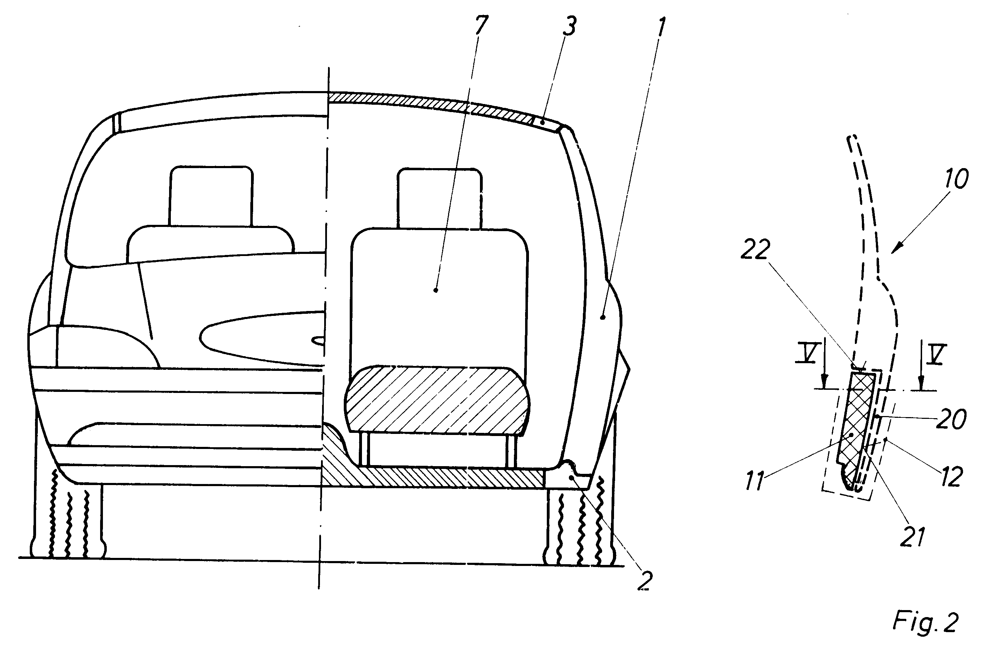

Fig.1 und 2 zeigen eine vordere Tür in einer ersten Ausführungsform der Erfindung, es könnte sich aber ebenso um eine hintere Tür handeln. Die Türöffnung 1 eines Kraftfahrzeuges wird von einem Schweller 2, der deren unteren Rand bildet, einem Dachholm 3, einem vorderen Türholm 4 und einem hinteren Türholm 5 begrenzt. Im Inneren des Fahrzeuges ist ein Armaturenbrett 6 und ein Fahrersitz 7 zu erkennen. Eine in die Türöffnung 1 passende Tür 10 ist in Fig.2 aus Gründen der Darstellung aus der Türöffnung 1 herausgezogen und in Fig.1 und Fig.2 strichliert gezeichnet. Im unteren Teil der Türöffnung 1 ist ein Kollisionsschutzkörper 11 vorgesehen, der etwa von der Beckengegend des Fahrers bis zum Schweller 2 hinuntergezogen ist und gemeinsam mit der Tür 10 die Türkontur 12 bildet. Ein den Kollisionsschutzkörper 11 überlappender Teil 20 der Tür 10 reicht ebenfalls bis zum Schweller 2. Zwischen dem Teil 20 der Tür 10 und dem Kollisionsschutzkörper 11 besteht eine vertikale Kontaktfläche 21 und eine horizontale Kontaktfläche 22. In Fig.1 ist der Kollisionsschutzkörper 11 bei geschlossener Tür gezeichnet und es sind Befestigungsstellen 23 angedeutet, an denen dieser mit dem überlappenden Teil 20 der Tür 10 auf noch zu beschreibende Weise verbunden ist.

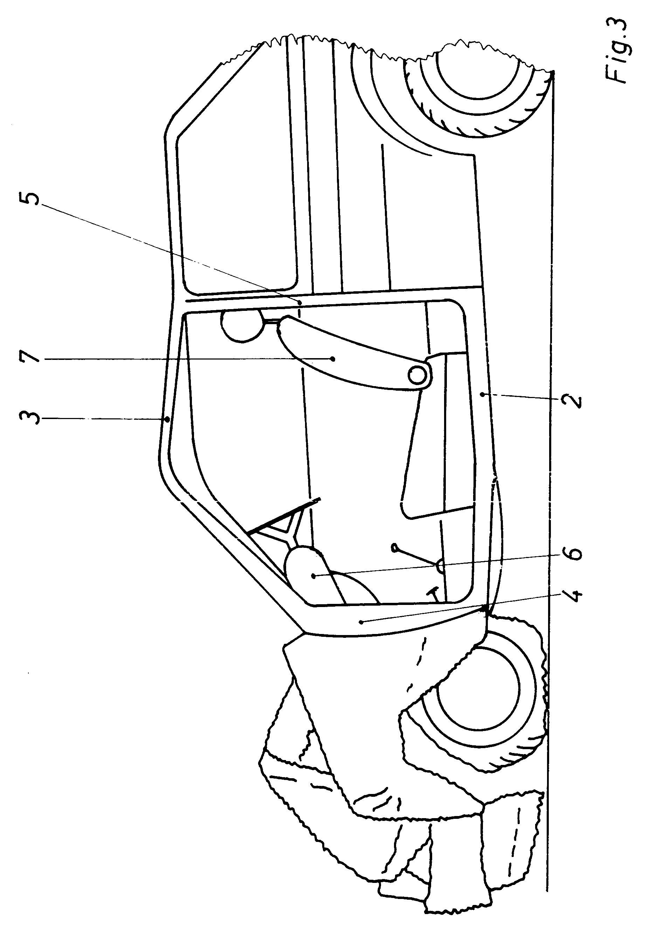

Fig.3 zeigt ein Kraftfahrzeug nach dem Stand der Technik, zur Erläuterung der parallelogrammartigen Verformung der Türöffnung. Dadurch, daß der Schweller 2 und der Dachholm 3 unter der Wirkung einer frontalen Kollision aufwärts gebogen sind, ist der vordere Türholm 4 bezüglich des hinteren Türholmes 5 parallelogrammartig aufwärts-rückwärts verschoben. Durch die vorliegende Erfindung soll auch diesem Verformungsmuster entgegengewirkt werden.

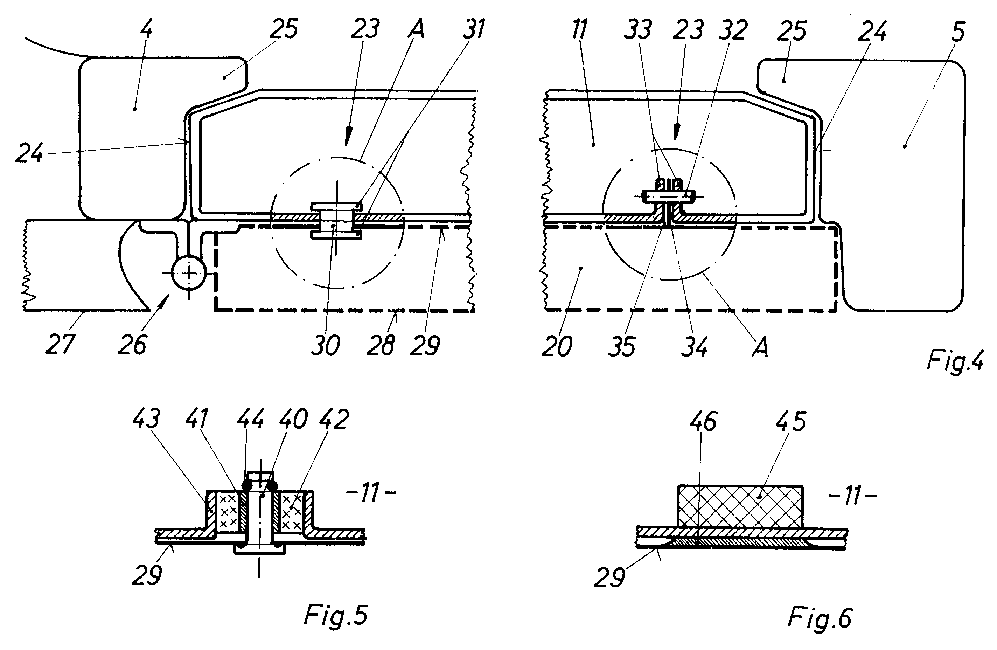

In dem in Fig.4 gezeigten horizontalen Schnitt durch den Kollisionsschutzkörper 11 ist zu erkennen, daß dieser ein Kasten ist, dessen Stirnflächen 24 am vorderen und hinteren Türholm 4,5 anliegen. Der Querschnitt der Türholme 4,5 weist in die Türöffnung hineingezogene vorspringende Teile 25 auf, die den Kollisionsschutzkörper 11 daran hindern, in das Innere des Fahrzeuges einzudringen. Durch die Anlage der Stirnflächen 24 an den Holmen 4,5 über deren ganze Höhe wird einem parallelogrammartigen Verschieben der beiden Türholme 4,5 zueinander entgegengewirkt.

Der als Kasten ausgebildete Kollisionsschutzkörper 11 ist nur durch seine äußeren Konturen dargestellt. Er kann längs-gerichtete Profile verschiedenster Art und/oder andere energieverzehrende oder stoßdämpfende Vorrichtungen, Körper oder Füllungen enthalten. Er kann auch Vorrichtungen enthalten, die im Kollisionsfall aus den Stirnflächen herausragen und ihn so im Türrahmen verankern oder gar verkrallen. Er wird aus Festigkeitsgründen im allgemeinen ein geschlossener Kasten sein, jedoch können an verschiedenen Stellen zu diversen Zwecken Öffnungen vorgesehen sein.

Der Kollisionsschutzkörper 11 ist im dargestellten Ausführungsbeispiel über ein Scharnier 26 am vorderen Türholm 4 schwenkbar gelagert. Ein nicht dargestelltes zweites Scharnier ist dann an dem oberen Teil der Tür fest in bekannter Weise befestigt. Das Scharnier 26 wird von einem Karosserieblech 27 abgedeckt, das mit einem Außenblech 28 des überlappenden Teiles 20 der Tür fluchtet. Das gemeinsam mit dem Außenblech 28 den überlappenden Teil 20 der Tür bildende Innenblech 29 ist mit dem Kollisionsschutzkörper 11 an den Stellen 23 verbunden. Dazu gibt es diverse Möglichkeiten, von denen zwei verschiedene für die Befestigungsstellen 23 in der Fig.4 dargestellt sind. In der Nähe des Scharnieres 26 dient als Verbindungsteil ein rotationssymmetrischer Scherkörper 30 mit zwei Kragen 31, zwischen denen eine Wand des Kastens 11 und die Innenwand 29 der Tür 10, gegebenenfalls unter Zwischenschaltung einer körperschalldämpfenden Einlage zusammengeklemmt werden. Der Scherkörper 30 besteht aus einem metallischen oder keramischen spröden Werkstoff, der bei Verschiebung der beiden Blechteile gegeneinander (eine solche findet auch bei einer Seitenkollision durch die Durchbiegung statt) abgeschert wird.

Gemäß einer anderen Variante, in Fig.4 vom Scharnier 26 weiter entfernt, ist als Verbindungsteil ein Scherbolzen 32 vorgesehen, der Bohrungen in den Stegblechen 33 am Kasten 11 und in einem mit der Innenwand 29 der Tür fest verbundenen Stegblech 34 durchsetzt. Die Stegbleche 33 sind im Inneren des Kastens 11 beiderseits eines Schlitzes 35 ausgebildet bzw angeschweißt, in den die Lasche 34 eingesteckt ist. Bei einem seitlichen Stoß wird der Scherbolzen 32 abgeschert, dazu kann er mit einer nicht sichtbaren Kerbe versehen sein.

In einer Abwandlung gemäß Fig.5 ist an dem Innenblech 29 der Tür ein Zapfen 40 angebracht, vorzugsweise angeschweißt. Die Wand des Kastens 11 weist eine kreisförmige Einstülpung 43 auf, in die eine gummielastische Büchse 42 eingepreßt ist, die im Inneren eine Hülse 41 trägt. In diese Hülse 41 ist der Zapfen 40 eingeschoben und durch einen Sicherungsring 44 fest gehalten. Der Zapfen 40 wird während oder nach einer Kollision aus der Hülse 41 herausgerissen. Die elastische Büchse verhindert ein Verkanten zwischen Hülse 41 und Zapfen 40, damit der Zapfen 40 jedenfalls aus der Hülse 41 gezogen werden kann.

In einer anderen Abwandlung gemäß Fig.6 ist im Inneren des Kastens 11 eine Magnetplatte 45 befestigt, vorzugsweise angeklebt. Sie wirkt durch die Wand des Kastens hindurch auf eine Kontaktplatte 46, die mit der Innenwand 29 der Tür 10 fest verbunden, etwa verschweißt ist. Der Magnet 45 ist hier beispielsweise ein Permanentmagnet. Er könnte auch elektrisch aktivierbar ausgebildet sein und im Falle einer Kollision elektronisch gesteuert deaktiviert werden. Außerdem müssen die Kontaktflächen nicht unbedingt eben sein, es sind auch konische Formen denkbar, die nebstbei die genaue Positionierung erleichtern. Schließlich könnte die Entriegelung sogar mechanisch erfolgen, wozu ein Bowdenzug oder ein Gestänge vorzusehen wäre, das entweder von außen oder von innen betätigbar ist.

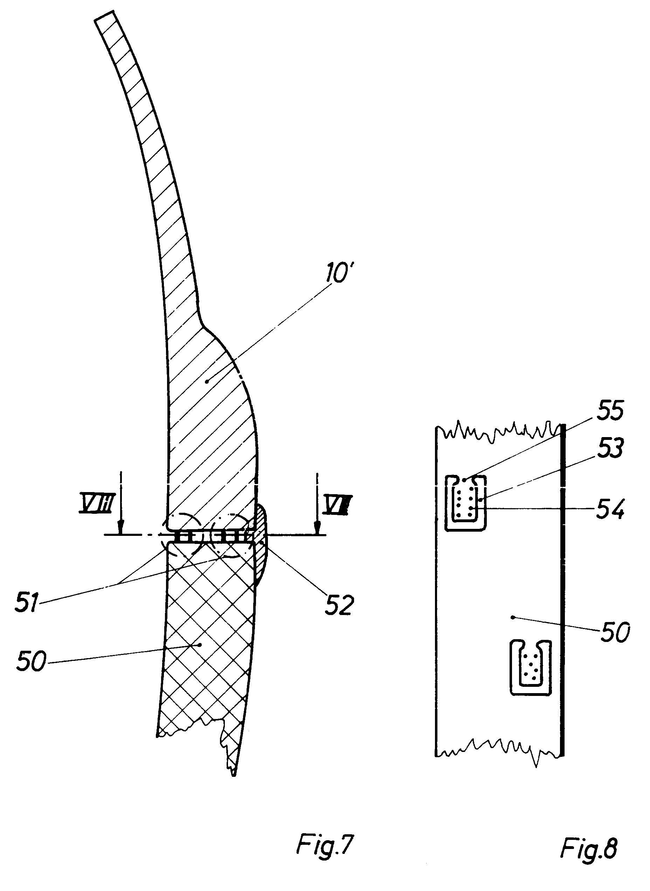

Fig.7 zeigt eine andere Ausführungsform der Erfindung, die sich von der ersten dadurch unterscheidet, daß der Kollisionsschutzkörper 50 als Kasten ausgebildet ist, der über die gesamte Dicke der Tür reicht und gewissermaßen deren unteren Teil bildet. Er ist an den Befestigungsstellen 51 mit dem eigentlichen leichten Teil der Tür 10' verbunden. Mit 52 ist noch ein Keder bezeichnet, der der Verschönerung und äußeren Abdichtung dient. An den Befestigungsstellen 51 können Verbindungsteile der weiter oben beschriebenen Art verwendet werden. Es können aber auch an einem der beiden Teile die in Fig.8 gezeigten Sollbruchstellen Verwendung finden. Diese sind Ausstanzungen 53, durch die Laschen 54 gebildet sind, die aus der Ebene heraus gebogen und mit dem jeweils anderen Teil durch Punktschweißen verbunden sind. Mit ihrem eigenen Teil sind sie über schmale Stege 55 verbunden, die als Sollbruchstellen dienen. Im Kollisionsfall reißen diese bei einer vorbestimmten Belastung ab und lösen so die Verbindung zwischen dem Kasten 50 und der Tür 10'. Derartige Sollbruchstellen können auch in der ersten Ausführungsform der Erfindung an der vertikalen oder horizontalen Kontaktfläche 21,22 (Fig.2) Verwendung finden.

Von den beschriebenen Ausführungsbeispielen kann im Rahmen der Erfindung in verschiedener Weise abgewichen werden und die verschiedenen Elemente können in verschiedener Weise kombiniert werden.

## Patentansprüche

1. Fahrzeugtüre mit einem längsgerichteten, von einem vorderen bis zu einem hinteren Türholm des Fahrzeuges reichenden, Kollisionsschutzkörper, dessen Enden sich im Kollisionsfall an den Türholmen abstützen, **dadurch gekennzeichnet,** daß der Kollisionsschutzkörper (11;50) als mit der Türe (10) lösbar verbundene, im Vertikalschnitt quer zur Fahrtrichtung einen Teil der Türkontur (12) bildende Baueinheit ausgebildet ist, sodaß im Kollisionsfall die Fahrzeugtüre (10) geöffnet werden und der Kollisionsschutzkörper (11;50) in der Türöffnung (1) verbleiben kann.

2. Fahrzeugtüre nach Anspruch 1 **dadurch gekennzeichnet,** daß der Kollisionsschutzkörper (11) ein Kasten ist, dessen Stirnflächen (24) am vorderen (4) und hinteren (5) Türholm anliegen.

3. Fahrzeugtüre nach Anspruch 1 oder 2 **dadurch gekennzeichnet,** daß der Kollisionsschutzkörper (11;50) an seiner in Fahrtrichtung vorderen Stirnseite ein am Türholm (4) angeschlagenes Scharnier (26) aufweist und bis zum unteren Rand (2) der Türöffnung (1) reicht.

4. Fahrzeugtüre nach einem der Ansprüche 1 bis 3 **dadurch gekennzeichnet,** daß der Kollisionsschutzkörper (11) an der Innenseite der Tür (10) angeordnet ist.

5. Fahrzeugtüre nach einem der Ansprüche 1 bis 3 **dadurch gekennzeichnet,** daß der Kollisionsschutzkörper (50) den ganzen unteren Bereich der Tür bildet.

6. Fahrzeugtüre nach einem der Ansprüche 1,2,4 oder 5 **dadurch gekennzeichnet,** daß zur Verbindung von Kollisionsschutzkörper (11;50) und Tür (10;10') Verbindungsteile (30;32;40) vorgesehen sind, die im Kollisionsfall brechen oder reißen und so die Verbindung mit der Türe lösen.

7. Fahrzeugtüre nach Anspruch 6, **dadurch gekennzeichnet,** daß die Verbindungsteile (30;32) aus einem spröden Werkstoff bestehen, der bei Scherbeanspruchung bricht.

8. Fahrzeugtüre nach einem der Ansprüche 1,2,4 oder 5, **dadurch gekennzeichnet,** daß zur Verbindung von Kollisionsschutzkörper (11) und Tür (10) als Verbindungsteile an einem Teil (10;11) Zapfen (40) vorgesehen sind, die in mittels elastischer Büchsen (42) am anderen Teil (11;10) befestigte Hülsen (41) eingesteckt sind.

9. Fahrzeugtüre nach einem der Ansprüche 1,2,4 oder 5, **dadurch gekennzeichnet,** daß Tür (10') und Kollisionsschutzkörper (11;50) über Sollbruchstellen (55) miteinander verbunden sind, die an einem der beiden Teile (10',11;50) ausgebildet sind.

10. Fahrzeugtüre nach einem der Ansprüche 1,2,4 oder 5, **dadurch gekennzeichnet,** daß zur Verbindung von Kollisionsschutzkörper (11;50) und Tür (10;10') Magnete (45) an einem der beiden Teile (11;50,10;10') angebracht sind, die mit entsprechend geformten Flächen (46) des anderen Teiles zusammenwirken.

11. Fahrzeugtüre nach Anspruch 10, **dadurch gekennzeichnet,** daß die Magnete Elektromagneten sind, deren Stromzufuhr im Kollisionsfall untebrochen wird.

## Claims

1. Vehicle door with a longitudinally oriented collision-protection body reaching from the front door post (4) to the rear door post (5) of a motor-car and whose ends are supported by the door posts in case of a collision, **caracterized** in that the collision-protection body (11;50) is a unit separably joined with the door (10) and constituting, in a lateral vertical section, part of the contour (12) of the door, so as to allow opening the door (10) of the vehicle in case of a collision, the collision-protection (11;50) body remaining in the door-opening (1).

2. Vehicle door according to claim 1, **caracterized** in that the collision-protection body (11;50) is a box-section beam, whose front and rear ends (24) abut with the front door post (4) and the rear door post (5).

3. Vehicle door according to claim 1 or claim 2, **caracterized** in that the front end of the collision-protection body (11;50) is provided with a hinge which is fastened to the door post (4) and that the collision-protection body (11;50) reaches as far down as the lower edge of the door opening (1).

4. Vehicle door according to either of the claims 1 to 3, **caracterized** in that the collision-protection body (11) is arranged at the inner side of the door (10).

5. Vehicle door according to either of the claims 1 to 3, **caracterized** in that the collision-protection body (50) constitutes the entire lower part of the door.

6. Vehicle door according to either of the claims 1 to 5, **caracterized** in that links (30; 32; 40) are provided for the collision-protection body (11;50) to the door (10; 10'), which links break or are teared off in case of a collision.

7. Vehicle door according to claim 6, **caracterized** in that the links (30; 32) are made from a brittle material which breaks if exposed to shear forces.

8. Vehicle door according to either of the claims 1 to 5, **caracterized** in that the links for joining the collision-protection body (11) to the door (10) are pegs (40) on one part (10;11) which are plugged in bushings (41) fixed to the other part (11;10) by means of elastic sleeves (42).

9. Vehicle door according to claim 6, **caracterized** in that the door (10') and the collision-protection body (11;50) are joined by way of breaking points (55) which are formed on either of the two parts (10',11; 50).

10. Vehicle door according to either of the claims 1 to 5, **caracterized** in that the door (10') and the collision-protection body (11;50) are joined by way of magnets (45) fixed to either of the two parts, the magnets cooperating with suitably shaped surfaces of the other part.

11. Vehicle door according to claim 10, **caracterized** in that the magnets are electriv magnets whose electricity supply is interrupted in case of a collision.

## Revendications

1. Porte de voiture comportant un corps de protection de collision s'étendant longitudinalement à partir d'un montant de porte antérieur de la voiture jusqu'à un montant de porte postérieur, ses extrémités s'appuyant sur les montants de porte en cas de collision, **caractérisée** en ce que le corps de protection de collision (11;50) est conformé comme une unité reliée de façon détachable à la porte (10) et constitue, dans la section verticale, une partie du contour (12) de la porte, de manière à permettre d'ouvrir la porte du véhicule en cas de collision, le corps de protection de collision demeurant dans l'ouverture de porte (1).

2. Porte de voiture selon la revendication 1, **caractérisée** en ce que le corps de protection de collision (11) est une poutre en forme de caisson, dont les faces avant et arrière (24) sont situées adjacentes du montant de porte antérieur (4) et du montant de porte postérieur (5).

3. Porte de voiture selon une des revendications 1 ou 2, **caractérisée** en ce que le corps de protection de collision (11;50) comporte, sur sa face avant en direction de marche, une charnière (26) articulée au montant de porte (4), le corps de protection s'étendant jusqu'au bord inférieur (2) de l'ouverture de porte (1).

4. Porte de voiture selon une des revendications 1 à 3, **caractérisée** en ce que le corps de protection (11) est disposé au coté intérieur de la porte (10).

5. Porte de voiture selon une des revendications 1 à 3, **caractérisée** en ce que le corps de protection (50) constitue la partie inférieure entière de la porte.

6. Porte de voiture selon une des revendication 1,2,4 ou 5, **caractérisée** en ce que des éléments de liaison (30;32;40) sont prévus dans le but de relier le corps de protection (11; 50) à la porte (10;10'), les éléments de liaison étant rompus ou déchirés en cas de collision de manière à détacher la porte.

7. Porte de voiture selon la revendication 6, **caractérisée** en ce que les éléments de liaison (30;32) sont constitués d'un matériau rompu par sollicitation de cisaillement.

8. Porte de voiture selon une des revendications 1,2,4 ou 5, **caractérisée** en ce que les éléments reliant le corps de protection (11) à la porte (10), sont d'une part des tourillons (40) en prise avec des douilles (41) reliées à l'autre part (11,10) par l'intermédiaire de douilles élastiques (42).

9. Porte de voiture selon une des revendications 1,2,4 ou 5, **caractérisée** en ce que la porte (10') et le corps de protection (11;50) sont reliés l'un à l'autre par des membres de rupture (55) formés sur l'un ou l'autre (10,11;50).

10. Porte de voiture selon une des revendications 1,2,4 ou 5, **caractérisée** en ce que le corps de protection (11;50) est relié à la porte (10;10') moyennant des aimants (45) attachés à l'un des deux (11;50,10;10') et coopérant avec des surfaces appropriées (46) formées par l'autre.

11. Porte de voiture selon la revendication 10, **caractérisée** en ce que les aimants sont des électro-aimants dont l'alimentation est interrompue en cas de collision.
